# FASCICULE DE BREVET EUROPEEN

(11) **EP 4 337 535 B1**
(45) Date de publication et mention de la délivrance du brevet: **04.11.2026**
(21) Numéro de dépôt: 22727379.4
(22) Date de dépôt: 10.05.2022
(51) Int. Cl.: B64U 10/10, B64U 50/33

(54) **SYSTEME DE GESTION D'ENERGIE POUR AERONEF A SOURCE D'ENERGIE HYBRIDE COMPRENANT AU MOINS UNE SOURCE D'ELECTRICITE RECHARGEABLE ET UNE SOURCE DE GENERATION D'ELECTRICITE**
SYSTEM ZUR LEISTUNGSVERWALTUNG FÜR EIN FLUGZEUG MIT EINER HYBRIDEN STROMQUELLE MIT MINDESTENS EINER WIEDERAUFLADBAREN STROMQUELLE UND EINER STROMERZEUGUNGSQUELLE
SYSTEM FOR MANAGING POWER FOR AN AIRCRAFT WITH A HYBRID POWER SOURCE COMPRISING AT LEAST ONE RECHARGEABLE ELECTRICITY SOURCE AND ONE ELECTRICITY GENERATING SOURCE

(30) Priorité: 10.05.2021 FR 2104948
(43) Date de publication de la demande: 20.03.2024
(73) Titulaire: Ascendance Flight Technologies, 31400 Toulouse (FR)
(72) Inventeur: DINEL, Clément, 31400 Toulouse (FR); MARDUEL, Marion, 31400 Toulouse (FR)
(74) Mandataire: Plasseraud IP
(86) Numéro de dépôt international: PCT/FR2022/050892
(87) Numéro de publication internationale: WO 2022/238653

(56) Documents cités:
- EP-A1- 3 116 781
- WO-A1-2015/195856
- WO-A1-2020/044134
- WO-A2-2021/064395

## Description

L'invention concerne le domaine des aéronefs et plus particulièrement le domaine des systèmes de gestion d'énergie pour aéronef à source d'énergie hybride comprenant au moins une source d'électricité rechargeable et une source de génération d'électricité.

Le domaine de l'aéronautique connaît actuellement de nombreux bouleversements, en partie en rapport avec l'évolution des exigences liées à l'environnement, et en partie en rapport avec le développement d'aéronefs à motorisation électrique. En particulier, le domaine des VTOL (pour Vertical Take-Off and Landing en anglais ou avion à décollage et atterrissage vertical) est particulièrement dynamique car il offre des prospects très intéressants en tant que nouveau moyen de mobilité.

Les VTOL sont un domaine en soi assez ancien (ils ont été développés dès 1921), mais leur électrification a fait exploser les nouvelles solutions proposées, ainsi que les règlementations. En particulier, les dernières règlementations (voir par exemple SC-VTOL-01 SPECIAL CONDITION Vertical Take-Off and Landing (VTOL) Aircraft ; émise le 2 juillet 2019) nécessitent une redondance de tous les systèmes liés à la motricité et au vol, des moteurs, aux sources d'énergie en passant par tout le système électrique pour permettre d'assurer une continuité du vol (appelée en anglais "continued safe flight and landing") et pas uniquement un atterrissage d'urgence suite à la survenance d'une panne. Cela est également appelé "one-fail-safe" en anglais, c'est-à-dire « tolérant à une panne simple ».

Ces règlementations ont fortement encouragé le développement de solutions impliquant de la redondance, tant au niveau des sources d'électricité rechargeables, que des sources de génération d'électricité, mais également au niveau des moteurs et rotors.

La conséquence de cette évolution est une complexification très importante des systèmes de commande. Traditionnellement, trois systèmes de commande peuvent se côtoyer dans un aéronef à source d'énergie hybride :
- un système de gestion de vol (appelé "flight management" system en anglais ou FMS), qui gère les paramètres de vol en fonction des conditions externes et des commandes de vol, et en particulier détermine les appels de puissance électrique instantanée par les moteurs et/ou les rotors et les commande en conséquence, mais optionnellement les autres paramètres comme les orientations des volets, des stabilisateurs, des ailerons, etc.,
- un système de gestion des batteries (appelé "Battery Management System" en anglais, ou BMS), qui a pour rôle d'optimiser la gestion de l'énergie électrique dans les sources d'électricité rechargeables, et
- un système de gestion d'énergie (appelé "Energy Management System" en anglais ou EMS), pour gérer la fourniture de puissance électrique aux consommateurs, conformément aux requêtes du FMS (comme pourrait le faire un FADEC pour "Full Authority Digital Engine Control" en anglais dans le cas d'un système de propulsion thermique conventionnel).

Ces trois systèmes peuvent cohabiter, mais il peut également arriver que le BMS et l'EMS soient considérés comme combinés, par exemple lorsque le BMS ou l'EMS est simplifié à l'extrême.

Pour faire face au défi que représente la gestion de la redondance, l'optimisation de la consommation électrique, des pilotes spécifiques sont développés, qui viennent se greffer aux côtés des FMS, BMS et EMS. L'ajout de la gestion du one-fail safe complique encore la situation.

Compte tenu des exigences de fiabilité du milieu aéronautique, ces problèmes sont classiquement gérés en listant de manière exhaustive tous les cas possibles pour chaque problématique (gestion de l'énergie, gestion de la redondance/des pannes), et un arbre qui permet de reproduire cette exhaustivité pour chaque problématique. C'est par exemple le cas du document CN 109094790.

Cependant, au fur et à mesure du progrès, les arbres deviennent de plus en plus complexes à générer et gérer, et deviennent eux-mêmes des sources de risque. De plus, **dès qu'un** élément de l'architecture change, les arbres deviennent obsolètes et il faut repartir de zéro. D'autres solutions recherchent à gérer selon les phases de vol, comme le document FR 3 084 318 ou le document US 2011/0178648. Mais là encore, ces approches sont lacunaires et peu adaptables. EP3116781A1 divulgue une alimentation électrique en courant continu destinée à un véhicule aérien sans pilote à rotors multiples, qui peut être mise en œuvre à l'aide d'un système d'alimentation hybride utilisant à la fois un moteur à combustion interne et un ensemble de batteries, ainsi qu'un système de surveillance de l'état de santé.

Pour cette raison, il n'existe pas à ce jour de système qui permette de gérer efficacement l'énergie au sein d'un aéronef hybride, tout en permettant de maîtriser les problématiques de one-fail-safe.

L'invention vient améliorer la situation. À cet effet, elle propose un système de gestion d'énergie pour aéronef à source d'énergie hybride comprenant au moins une source d'électricité rechargeable et une source de génération d'électricité. Ce système comprend un détecteur agencé pour déterminer d'une part des données d'état indiquant un état des éléments du circuit électrique de consommation de puissance de l'aéronef commandé par le système de gestion d'énergie, et d'autre part des données énergétiques relatives à la puissance électrique instantanée demandée par l'aéronef et/ou l'état de chargement des sources d'électricité rechargeables de l'aéronef, un automate agencé pour recevoir les données énergétiques du détecteur et pour déterminer un état de commande des sources d'énergie.

L'automate comprenant au moins trois états dans le groupe comprenant :
* un état tampon dans lequel la puissance électrique instantanée demandée est inférieure à la capacité de la ou des sources de génération électrique et est fournie par ces dernières,
* un état de charge dans lequel la puissance électrique instantanée demandée est inférieure à la capacité de la ou des sources de génération électrique et est fournie intégralement par la ou les sources de génération d'électricité, et dans lequel la ou les sources de génération d'électricité produit un surplus de puissance utilisé pour recharger la ou des sources d'électricité rechargeables, et
* un état turbo dans lequel la puissance électrique instantanée demandée est supérieure à la capacité de la ou des sources de génération électrique, et où la ou les sources d'électricité rechargeables fournissent le complément nécessaire pour atteindre la puissance électrique instantanée demandée.

Le système comprend également un adaptateur agencé pour recevoir les données d'état et pour déterminer une configuration électrique de secours lorsque les données d'état indiquent une panne, un pilote agencé pour recevoir l'information d'état de l'automate et pour déterminer une commande électrique pour la ou les sources électriques rechargeables et la ou les sources de génération électrique en fonction de la puissance électrique instantanée demandée, et un commutateur agencé pour émettre des commandes vers les commutateurs du circuit électrique de consommation de puissance de l'aéronef commandé par le système de gestion d'énergie pour mettre en œuvre une configuration électrique nominale, ou, en cas de réception d'une configuration électrique de secours de l'adaptateur, cette configuration électrique de secours.

Ce système de gestion d'énergie est particulièrement avantageux car il permet d'introduire une gestion fonctionnelle et simplifiée. En effet, le découplage automate / adaptateur permet de gérer à la fois l'énergie et de tirer parti de la redondance potentielle de l'architecture tout en gérant le one-fail-safe. Un autre avantage de l'architecture de ce système de gestion d'énergie est qu'il est « agnostique » à l'architecture de l'aéronef hybride. En effet, en découplant la gestion énergétique et la gestion de la configuration du circuit pour mettre en œuvre la consommation électrique, le système de gestion d'énergie devient capable de gérer tout degré de redondance électrique ou mécanique de l'aéronef, puisqu'il suffit de modifier le paramétrage de l'adaptateur. Ce système de gestion d'énergie présente donc de grandes capacités d'extensibilité et peut être rapidement déployé sur de nombreux aéronefs hybrides d'architectures très diverses.

Selon divers modes de réalisation, l'invention peut présenter une ou plusieurs des caractéristiques suivantes :
- le pilote est agencé pour solliciter les sources d'électricité rechargeables lorsque l'automate est dans l'état tampon, pendant une transition durant laquelle la puissance délivrée par la ou les sources de génération électrique augmente jusqu'à la puissance électrique instantanée demandée,
- **l'automate** est initialisé avec l'état tampon, et présente les règles de transition suivantes :
   * transition de l'état tampon ou de l'état de charge vers l'état turbo lorsque la puissance électrique instantanée demandée est supérieure à la capacité de la ou des sources de génération électrique,
   * transition de l'état turbo vers l'état tampon lorsque la puissance électrique instantanée demandée est inférieure à la capacité de la ou des sources de génération électrique,
   * transition de l'état tampon vers l'état de charge lorsque la puissance électrique instantanée demandée est inférieure à la capacité de la ou des sources de génération électrique et qu'une ou plusieurs sources d'électricité rechargeables présente un état de charge inférieur à un seuil de charge complète, et
   * transition de l'état de charge vers l'état tampon lorsque la puissance électrique instantanée demandée est inférieure à la capacité de la ou des sources de génération électrique et qu'une ou plusieurs sources d'électricité rechargeables présente un état de charge égal à un seuil de charge complète,
- l'automate comprend en outre un état silencieux dans lequel la ou les sources d'énergie électrique sont désactivées,
- l'automate présente en outre les règles de transition suivantes :
   * transition de l'état tampon, de charge ou turbo vers l'état silencieux lorsqu'une commande de mode silencieux est reçue par le détecteur,
   * transition de l'état silencieux vers l'état tampon lorsque la commande de mode silencieux est désactivée,
- le pilote est agencé pour recevoir une configuration électrique de secours de l'adaptateur lorsqu'une panne est détectée, et pour commander l'extinction d'un ou plusieurs éléments du circuit électrique de consommation de puissance de l'aéronef commandé par le système de gestion d'énergie en fonction de la configuration électrique de secours, et
- le commutateur est agencé pour recevoir l'état de l'automate et pour émettre des commandes vers les commutateurs du circuit électrique de consommation de puissance de l'aéronef commandé par le système de gestion d'énergie en conséquence.

**L'invention** concerne également un procédé de gestion d'énergie pour aéronef à source d'énergie hybride comprenant au moins une source d'électricité rechargeable et une source de génération d'électricité qui comprend les opérations suivantes :
a) déterminer d'une part des données d'état indiquant un état des éléments du circuit électrique de consommation de puissance de l'aéronef commandé par le procédé de gestion d'énergie, et d'autre part des données énergétiques relatives à la puissance électrique instantanée demandée par l'aéronef et/ou l'état de chargement des sources d'électricité rechargeables de l'aéronef,
b) transmettre les données énergétiques de l'opération a) à un automate agencé pour déterminer un état de commande des sources d'énergie, l'automate comprenant au moins trois états dans le groupe comprenant :
   * un état tampon dans lequel la puissance électrique instantanée demandée est inférieure à la capacité de la ou des sources de génération électrique et est fournie par ces dernières,
   * un état de charge dans lequel la puissance électrique instantanée demandée est inférieure à la capacité de la ou des sources de génération électrique et est fournie intégralement par la ou les sources de génération d'électricité, et dans lequel la ou les sources de génération d'électricité produit un surplus de puissance utilisé pour recharger la ou des sources d'électricité rechargeables,
   * un état turbo dans lequel la puissance électrique instantanée demandée est supérieure à la capacité de la ou des sources de génération électrique, et où la ou les sources d'électricité rechargeables fournissent le complément nécessaire pour atteindre la puissance électrique instantanée demandée,
c) déterminer une commande électrique pour la ou les sources électriques rechargeables et la ou les sources de génération électrique en fonction de la puissance électrique instantanée demandée et de l'état de l'automate déterminé à l'opération b),
d) détecter à partir des données d'état la survenance d'une panne et déterminer une configuration électrique de secours, et
e) émettre des commandes vers les commutateurs du circuit électrique de consommation de puissance de l'aéronef commandé par le système de gestion d'énergie pour mettre en œuvre une configuration électrique nominale, ou, en cas de détermination d'une configuration électrique de secours à l'opération d), cette configuration électrique de secours.

L'invention concerne également un programme d'ordinateur comprenant des instructions mettre en œuvre le dispositif selon l'invention ou pour exécuter le procédé selon l'invention lorsque ledit programme d'ordinateur est exécuté sur un ordinateur, et un support de stockage de données sur lequel est enregistré ce programme d'ordinateur.

D'autres caractéristiques et avantages de l'invention apparaîtront mieux à la lecture de la description qui suit, tirée d'exemples donnés à titre illustratif et non limitatif, tirés des dessins sur lesquels :
- la figure 1 représente une vue schématique de l'architecture électrique d'un aéronef hybride comprenant un système de gestion d'énergie selon l'invention,
- la figure 2 représente un diagramme générique du système de gestion d'énergie de la figure 1,
- la figure 3 représente un diagramme schématique des états de l'automate de la figure 2, ainsi que les transitions entre ceux-ci,
- la figure 4 représente un schéma expliquant l'ordre des commandes (du pilote de l'aéronef jusqu'au système de gestion d'énergie) et leur répercussion respective,
- la figure 5 représente une boucle générique de commande d'un aéronef mettant en œuvre le dispositif selon l'invention.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

La présente description est de nature à faire intervenir des éléments susceptibles de protection par le droit d'auteur et/ou le copyright. Le titulaire des droits n'a pas d'objection à la reproduction à l'identique par quiconque du présent document de brevet ou de sa description, telle qu'elle apparaît dans les dossiers officiels. Pour le reste, il réserve intégralement ses droits.

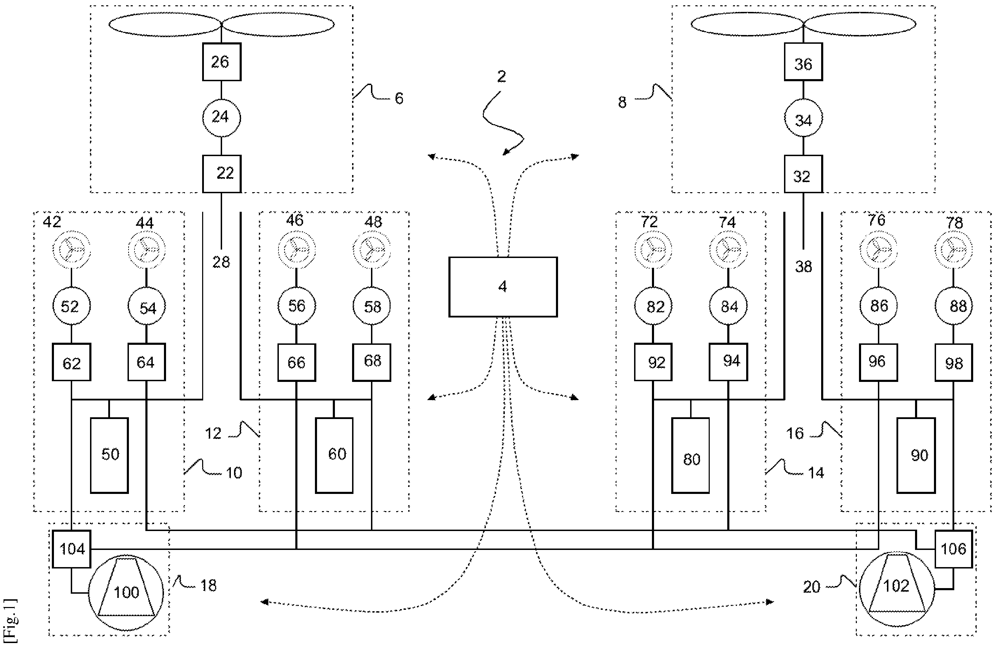

Comme on peut le voir sur la Figure 1, un aéronef 2 selon l'invention comprend un système de gestion d'énergie 4 selon l'invention, deux groupes d'entraînement horizontal 6 et 8, quatre groupes d'entraînement vertical 10, 12, 14 et 16, et deux sources de génération électrique 18 et 20.

Ce type d'aéronef est extrêmement novateur et est particulièrement adapté pour montrer le potentiel du système de gestion d'énergie 4. Cependant, l'aéronef pourrait présenter une architecture plus simple, par exemple un seul groupe d'entraînement horizontal, un ou deux groupes d'entraînement vertical et une seule source de génération électrique. Toujours en variante, l'aéronef pourrait ne pas être du type VTOL, mais être d'un autre type, par exemple un aéronef hybride « classique ».

Dans l'exemple décrit ici, le groupe d'entraînement horizontal 6 (respectivement 8) comprend un convertisseur de courant continu vers alternatif 22 (respectivement 32), un moteur électrique 24 (respectivement 34) et un propulseur 26 (respectivement 36), par exemple à hélice. Le propulseur 26 (respectivement 36) est agencé pour permettre à l'aéronef d'avancer dans une direction sensiblement horizontale. Dans l'exemple décrit ici, le propulseur 26 (respectivement 36) consomme en régime de vol une puissance de 80kW.

Le groupe d'entraînement horizontal 6 (respectivement 8) est relié en entrée à un commutateur 28 (respectivement 38) qui permet de relier cette entrée à la sortie du groupe de d'entraînement vertical 10 (respectivement 14) ou 12 (respectivement 16), comme décrit plus bas.

Le groupe d'entraînement vertical 10 (respectivement 12, 14, 16) comprend un rotor 42 (respectivement 46, 72, 76) entraîné par un moteur 52 (respectivement 56, 82, 86), un rotor 44 (respectivement 48, 74, 78) entraîné par un moteur 54 (respectivement 58, 84, 88). Les moteurs 52 et 54 sont alimentés par un convertisseur de courant continu vers alternatif respectif 62 et 64 (respectivement 66 et 68, 92 et 94, 96 et 98). Les convertisseurs de courant continu vers alternatif 62 et 64 (respectivement 66 et 68, 92 et 94, 96 et 98) sont reliés à un bus électrique du groupe d'entraînement vertical 10 (respectivement 12, 14, 16), auquel est relié une batterie 50 (respectivement 60, 80, 90) ainsi qu'une entrée reliée à un bus électrique de distribution de la source de génération électrique 18, une entrée reliée à un bus électrique de distribution de la source de génération électrique 20. Enfin le bus électrique de chacun des groupes d'entraînement vertical 10 et 12 (respectivement 14 et 16) est relié à une sortie respective de ces derniers, laquelle est reliée au commutateur 28 (respectivement 38). Comme on le verra plus bas, les batteries 50, 60, 80 et 90 délivrent ensemble 600kW lorsqu'elles délivrent 100% de leur capacité.

Dans l'exemple décrit ici, chaque source de génération électrique 18 (respectivement 20) comprend d'une part un générateur à turbine 100 (respectivement 102) et un convertisseur de courant alternatif vers continu 104 (respectivement 106). Dans l'exemple décrit ici, chaque générateur à turbine peut délivrer 40kW à 100% de sa capacité. En variante, les sources de génération électrique pourraient être d'autres sources de production d'électricité, à courant continu ou alternatif suivi d'un convertisseur de courant alternatif vers continu ou d'un convertisseur de courant continu vers continu. Ainsi, ces sources pourraient être basées sur des turbogénérateurs alimentés par du carburant conventionnel, du biocarburant, ou des fuels synthétiques. Toujours en variante, une source d'énergie à base d'hydrogène, comme une pile à combustible pourrait être utilisée.

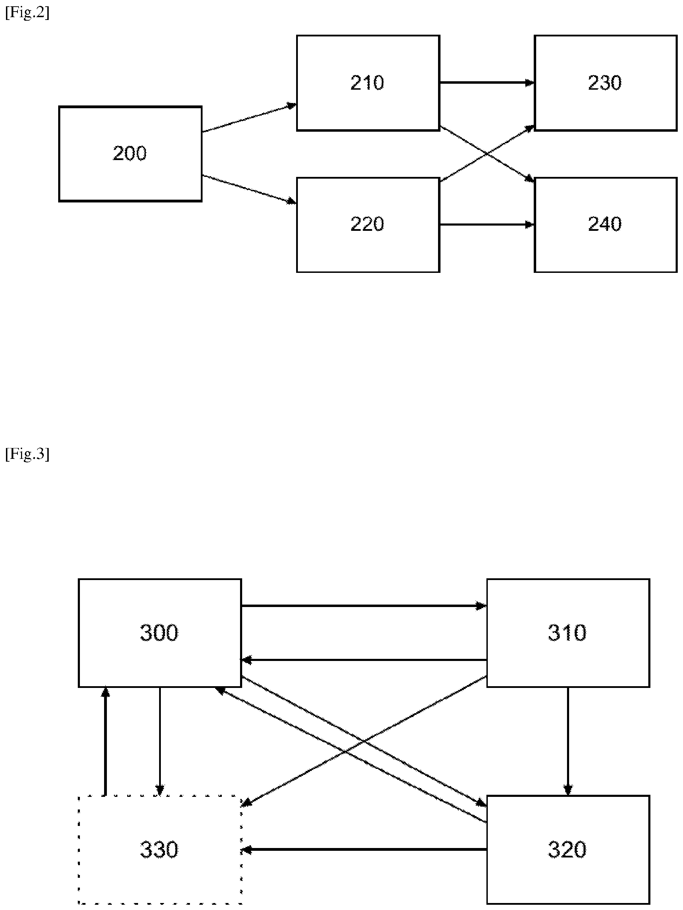

Comme on le verra avec la figure 2, le système de gestion d'énergie 4 est agencé pour commander d'une part les sources de génération électrique 18 et 20, d'autre part les commutateurs 28 et 38, mais également ainsi que divers éléments de protection non représentés sur la Figure 1.

Lorsque l'on analyse la Figure 1, il apparaît que tous les éléments moteurs et électriques sont dédoublés. Ainsi, le one-fail-safe peut être assuré. En effet, il y a deux groupes d'entraînement horizontal, quatre groupes d'entraînement vertical eux-mêmes formant deux sous-groupes reliés à un même groupe d'entraînement horizontal, et deux sources de génération électrique.

Au-delà de cette duplication assez classique, ce sont les bus électriques propres à chaque groupe d'entraînement vertical, ainsi que le bus électrique de distribution propre à chaque source de génération électrique qui permettent d'atteindre cet objectif.

En effet, comme on le verra plus bas, la structure particulière de l'aéronef de la Figure 1 permet d'avoir une réelle hybridation des sources d'énergie électrique, par opposition aux solutions existantes dans lesquelles il s'agit d'une juxtaposition. Ainsi, selon les besoins en puissance, tant les batteries que les sources de génération électrique peuvent fonctionner de concert. Mais au-delà de cela, cette architecture permet de traiter les batteries comme de purs « tampons d'énergie » (tampon au sens « buffer » en anglais). Les batteries sont traitées de manière totalement passives, sans aucun besoin d'intelligence logicielle ou matérielle autre que l'intelligence basique requise pour faire fonctionner le système batterie en lui-même BMS (Battery Management System), par exemple pour activer les protections et remonter le statut. Cela va totalement à l'encontre de toutes les solutions existantes, dans lesquelles, soit un élément est spécifiquement prévu pour optimiser le fonctionnement des batteries, et joue un rôle de commande, soit un élément est prévu pour compenser une éventuelle faiblesse des batteries, mais en alternance exclusive, c'est-à-dire sans que les batteries et cet élément soient susceptibles de fonctionner simultanément.

La figure 2 représente un diagramme schématique du système de gestion d'énergie 4 de la figure 1. Comme on peut le voir sur cette figure, le système de gestion d'énergie 4 comprend un détecteur 200, un automate 210, un adaptateur 220, un pilote 230 et un commutateur 240.

Le détecteur 200 est un système agencé pour recevoir diverses données de l'aéronef 2, qu'il va optionnellement traiter et transmettre totalement ou en partie d'une part à l'automate 210, et d'autre part à l'adaptateur 220.

Ainsi, les données que reçoit le détecteur 200 sont de deux principales natures :
- d'une part des données d'état indiquant un état (niveau de sollicitation, température, limite, état de fonctionnement, état de panne, etc.) des éléments du circuit électrique de consommation de puissance de l'aéronef commandé par le système de gestion d'énergie 4, et
- d'autre part des données énergétiques relatives à la puissance électrique instantanée demandée par les moteurs 52, 54, 56, 58, 82, 84, 86, 88 des rotors 42, 44, 46, 48, 72, 74, 76, 78 et/ou les moteurs 24 et 34 des propulseurs 26 et 36, et/ou l'état de chargement des sources d'électricité rechargeables de l'aéronef 50, 60, 80 et 90.

Ainsi, le détecteur 200 a une vue globale de l'état fonctionnel des éléments liés à la consommation de puissance électrique, c'est-à-dire d'une part la présence d'une panne ou non ainsi que la phase de vol de l'aéronef 2, mais également de l'état énergétique de ces éléments, c'est-à-dire leur état instantané ainsi que la demande de puissance électrique instantanée liée au vol de l'aéronef 2, telle que déterminée en réponse aux commandes du FMS.

Dans ce qui suit, l'expression puissance électrique instantané demandée désignera toujours la puissance électrique qui est appelée par les moteurs 52, 54, 56, 58, 82, 84, 86, 88 des rotors 42, 44, 46, 48, 72, 74, 76, 78 et/ou les moteurs 24 et 34 des propulseurs 26 et 36, sauf s'il est explicitement mentionné une autre définition.

L'automate 210 est dans l'exemple décrit ici un automate fini dont un exemple de réalisation est représenté sur la figure 3. Comme on peut le voir sur cette figure, l'automate 210 présente quatre états possibles :
- un état 300 dit « tampon », dans lequel la puissance électrique instantanée demandée est inférieure à la capacité de la ou des sources de génération électrique 18 et 20, et est fournie par ces dernières,
- un état 310 dit « de charge », dans lequel la puissance électrique instantanée demandée est inférieure à la capacité de la ou des sources de génération électrique et est fournie intégralement par la ou les sources de génération d'électricité, et dans lequel la ou les sources de génération d'électricité produit un surplus de puissance utilisé pour recharger la ou des sources d'électricité rechargeables,
- un état 320 dit « turbo » dans lequel la puissance électrique instantanée demandée est supérieure à la capacité de la ou des sources de génération électrique, et où la ou les sources d'électricité rechargeables fournissent le complément nécessaire pour atteindre la puissance électrique instantanée demandée, et
- un état 330 optionnel dit « silencieux », dans lequel les sources d'énergie électrique 18 et 20 sont volontairement arrêtées afin de réduire les nuisances sonores, ce qui permet également de réduire l'émission de polluants.

L'automate 210 présente des transitions qui sont prévues pour assurer :
- d'une part un risque minimal dans la détermination des transitions d'état, afin de limiter les risques de défaillance liés à l'automate 210 (et donc au système de gestion d'énergie 4),
- d'autre part une recharge des batteries 50, 60, 80, 90 aussi fréquemment que possible.

Pour cette raison, les transitions d'états reposent sur deux variables :
- la puissance électrique instantanée demandée,
- le taux de recharge des batteries 50, 60, 80, 90.

De manière prioritaire, dès que la puissance électrique instantanée demandée excède la capacité de puissance électrique des sources de génération électrique 18 et 20, l'état tampon ou l'état de charge basculent vers l'état turbo. En effet, dans ce cas, il est crucial de faire fonctionner simultanément les batteries 50, 60, 80, 90 et les sources de génération électrique 18 et 20 afin de fournir suffisamment de puissance électrique pour mettre en œuvre les commandes de vol.

De manière secondaire, lorsque la puissance électrique instantanée demandée est inférieure à la capacité de puissance électrique des sources de génération électrique 18 et 20, la priorité est de recharger les batteries.

Ainsi, l'automate 210 peut transitionner de l'état tampon vers l'état de charge ou vers l'état turbo, et de l'état de charge vers l'état turbo, et il peut transitionner de l'état de charge vers l'état tampon ou de l'état turbo vers l'état tampon. En revanche, il ne peut pas transitionner de l'état turbo vers l'état de charge : il doit d'abord transitionner vers l'état tampon.

La raison à cela est que, de cette manière, chaque transition d'état est conditionnée par un unique changement de condition portant soit sur la puissance électrique instantanée demandée, soit sur l'état de charge des batteries. Ainsi, la fiabilité de l'automate 210 est améliorée car les risques de plusieurs transitions ou non-transitions successives sont minimales.

De plus, comme l'automate 210 rafraîchit son état à une fréquence d'environ 250Hz , il est possible de passer de l'état turbo à l'état de charge en passant par l'état tampon de manière quasi instantanée. En variante, cette fréquence pourrait par exemple être comprise entre 50Hz et 2kHz.

L'état silencieux 330 est pour sa part une option dans le sens où il dépend d'une activation manuelle par le pilote de l'aéronef 2. Ainsi, celui-ci envoie une commande d'extinction des sources de génération électrique 18 et 20 qui fait transitionner tout état vers l'état silencieux. De la même manière que pour les états de charge et turbo, lorsque cette commande est désactivée, l'automate 210 transitionne à nouveau vers l'état tampon.

L'état tampon constitue ainsi un état de démarrage et un état fondamental en ce qu'il permet de fiabiliser le fonctionnement de l'automate 210. Il convient de noter que les paramètres définissant les transitions peuvent être variés. Ainsi, la transition de l'état tampon vers l'état de charge peut être conditionnée par un seuil de chargement des batteries 50, 60, 80, 90, et ce seuil peut lui-même être modifié selon l'état opérationnel, fonctionnel et/ou le programme de vol de l'aéronef 2. De manière similaire, la capacité de puissance électrique des sources de génération électrique 18 et 20 peut être modifiée selon l'état opérationnel, fonctionnel et/ou le programme de vol de l'aéronef 2. Par exemple, dans certains cas de panne, il peut être nécessaire de faire fonctionner une ou plusieurs des sources de génération électrique 18 et 20 à une capacité supérieure à leur capacité nominale, par exemple 120%. Il convient alors d'adapter le seuil de transition vers l'état turbo en conséquence. Cette adaptation est réalisée dans l'exemple décrit ici par l'adaptateur 220 qui adapte le seuil de transition, et par le pilote 230 qui envoie cette information à la carte de contrôle de la source de génération électrique (respectivement aux cartes de contrôle des sources de génération électriques).

Toujours en variante, la bascule vers l'état silencieux pourrait ne pas être purement manuelle, mais tenir compte de l'environnement de l'aéronef 2, par exemple tenir compte d'un ou plusieurs paramètres parmi la hauteur de vol et un emplacement géographique.

L'adaptateur 220 est agencé pour recevoir les données d'état du détecteur 200. Sur cette base l'adapteur 220 peut déterminer un état de panne et une configuration électrique de secours correspondante. Par exemple, si les données d'état reçues du détecteur 200 indiquent que le moteur 52 est en panne, alors l'adaptateur 220 détermine que le groupe d'entraînement vertical 10 doit être isolé, et il renvoie une configuration électrique indiquant la nécessité de cette isolation et d'éteindre les éléments qu'il comprend.

L'adaptateur 220 contient ainsi une table de toutes les configurations de panne possibles, et la configuration électrique de secours correspondante à chacune. De manière similaire, si l'adaptateur 220 détermine qu'aucune panne n'a cours, alors il peut renvoyer une configuration électrique nominale qui peut par exemple tenir compte de la phase de vol de l'aéronef 2. Le fait que l'adaptateur 220 contienne une table avec toutes les configurations de panne possibles vise à garantir toute erreur. En variante, l'adaptateur 220 pourrait opérer à partir d'opérations logiques afin de déterminer la configuration électrique de secours.

Dans la pratique, la configuration électrique, qu'elle soit nominale ou de secours, traduit le fait que des commutateurs d'isolation et/ou des commandes d'extinction doivent être activés. En effet, chaque élément du circuit de la figure 1 est relié au reste du circuit par un commutateur (non représenté), et les consommateurs et les producteurs d'énergie sont en outre commandés à l'allumage ou l'extinction.

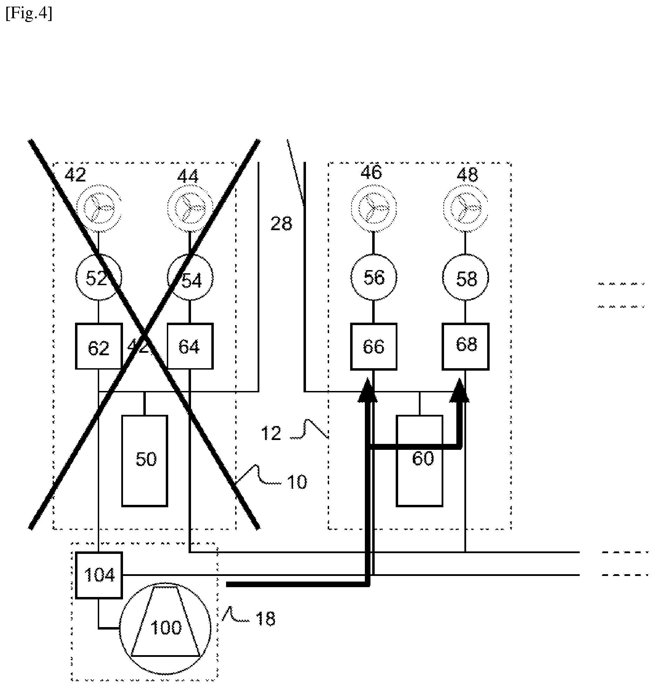

Si l'on reprend l'exemple de la panne du moteur 52, alors l'adaptateur 220 détermine une configuration électrique de secours qui isole le groupe d'entraînement vertical 10 comme cela est représenté sur la figure 4. Cela se traduit par une configuration électrique de secours qui indique que tous les commutateurs au sein du groupe d'entraînement vertical 10, c'est-à-dire le commutateur entre le convertisseur de courant alternatif vers continu 104 et l'entrée du groupe d'entraînement vertical 10 reliée au convertisseur de courant continu vers alternatif 62, le commutateur entre le convertisseur de courant alternatif vers continu 106 et l'entrée du groupe d'entraînement vertical 10 reliée au convertisseur de courant continu vers alternatif 64, le commutateur entre la batterie 50 et le reste du groupe d'entraînement vertical 10, et une commande d'extinction pour les moteurs 52 et 54. Cette configuration électrique de secours indique également que tous les commutateurs au sein du groupe d'entraînement vertical 12 doivent être activés pour basculer la puissance vers ce groupe, ainsi que le commutateur 28 qui doit basculer vers le groupe d'entraînement vertical 12.

Le pilote 230 reçoit d'une part l'état de l'automate 210, et d'autre part la configuration électrique de l'adaptateur 220. Sur cette base, le pilote 230 peut commander les sources d'électricité rechargeables 50, 60, 80 et 90 et/ou les sources de génération d'électricité 18 et 20 en fonction du régime énergétique correspondant à l'état de l'automate 210 et d'informations d'extinction indiquées par la configuration électrique de l'adaptateur 220.

Par exemple :
- en phase de décollage, avec l'état silencieux activé, le pilote 230 envoie une commande d'extinction des sources de génération d'électricité 18 et 20. Par extinction, il doit être compris que le pilote 230 émet une commande de déconnection électrique des éléments considérés du système électrique. Dans la pratique, cette commande peut se traduire par un régime dit « super idle » où les sources d'énergies concernées tournent à un régime hyper-ralenti, ce qui évite de les éteindre pour des raisons de sécurité (risque de problème de redémarrage).

Toujours en variante, cette extinction peut se traduire par une extinction électrique dans le sens littéral du terme,
- en phase de décollage, avec l'état de charge, le pilote 230 envoie une commande d'augmentation de la puissance des sources de génération d'électricité 18 et 20 pour faire baisser la puissance émise par les batteries 50, 60, 80 et 90 jusqu'à 0,
- en phase de décollage, avec l'état turbo, le pilote 230 envoie une commande d'augmentation de la puissance des sources de génération d'électricité 18 et 20 à leur capacité maximale,
- en phase de vol de croisière, avec l'état de charge, le pilote 230 envoie une commande d'augmentation de la puissance des sources de génération d'électricité 18 et 20 jusqu'à ce que la puissance émise par les batteries 50, 60, 80 et 90 soit égale à l'inverse de la puissance de recharge indiquée par le BMS (c'est-à-dire en pratique que les batteries reçoivent cette puissance de recharge),
- en phase de vol de croisière, avec l'état tampon, le pilote 230 envoie une commande d'augmentation de la puissance des sources de génération d'électricité 18 et 20 pour faire baisser la puissance émise par les batteries 50, 60, 80 et 90 jusqu'à 0,
- en phase de descente, avec l'état tampon, le pilote 230 envoie une commande d'augmentation de la puissance des sources de génération d'électricité 18 et 20 pour faire baisser la puissance émise par les batteries 50, 60, 80 et 90 jusqu'à 0,
- en phase d'atterrissage, avec l'état tampon, le pilote 230 envoie une commande d'augmentation de la puissance des sources de génération d'électricité 18 et 20 pour faire baisser la puissance émise par les batteries 50, 60, 80 et 90 jusqu'à 0,
- en phase d'atterrissage, avec l'état turbo, le pilote 230 envoie une commande d'augmentation de la puissance des sources de génération d'électricité 18 et 20 à leur capacité maximale, etc.

Enfin, le commutateur 240 est agencé pour faire une opération binaire de type ET entre d'une part la configuration émise par l'adaptateur 220, et d'autre part par la configuration électrique induite par l'état de l'automate 210. Ainsi, si l'on reprend l'exemple de la panne du moteur 52, alors que l'état de l'automate 210 est l'état turbo, alors, pour les commutateurs du groupe d'entraînement vertical 10, cette opération sera 0 (issu de l'isolation commandée par la configuration électrique de secours émise par l'adaptateur 220) x 1 (issu de l'état turbo) qui retournera 0 pour ces commutateurs. Une fois l'état de tous les commutateurs du circuit déterminé par le commutateur 240, les commandes correspondantes sont envoyées à tous les commutateurs du circuit, et la boucle à partir du détecteur 200 peut reprendre.

Ainsi, il apparaît que :
- tous les éléments du circuit consommant ou produisant de la puissance sont reliés au détecteur 200 pour lui indiquer leur état,
- tous les éléments du circuit qui fournissent de la puissance sont commandés par le pilote 230,
- tous les commutateurs et commandes d'allumage / d'extinction sont commandés par le commutateur 240.

Ainsi, le système de gestion d'énergie de l'invention sépare intégralement la gestion du mode de production de puissance (via l'automate 210) et la gestion de la configuration électrique du circuit pour consommer cette puissance (via l'adaptateur 220). Le pilote 230 et le commutateur 240 sont des éléments de nature volontairement simplifiée de manière à recevoir chacun les sorties de l'automate 210 et de l'adaptateur 220 et à pouvoir tenir compte de ces sorties pour commander respectivement les fournisseurs de puissance et les commutateurs.

Cette décorrélation du contrôle du circuit électrique est particulièrement innovante et intéressante en ce qu'elle fonde une architecture qui peut être déployée rapidement et de manière fiable sur tous types d'aéronefs hybrides, quelle que soit la redondance de leur conception.

En variante, le pilote 230 pourrait être agencé pour ne recevoir des données que de l'automate 210, et le commutateur 240 pour ne recevoir des données que de l'adaptateur 220.

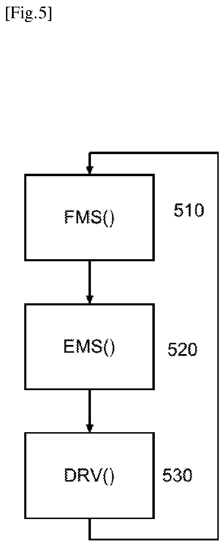

La figure 5 représente un schéma de fonctionnement très haut niveau de l'architecture d'un aéronef dans lequel est mise en œuvre le système de gestion d'énergie selon l'invention. Ainsi, une boucle de commande de l'aéronef a lieu en permanence, dans laquelle le FMS reçoit des commandes du poste de pilotage et des éléments d'assistance au pilotage via une fonction FMS() dans une opération 500.

Ensuite, dans une opération 510, les données générées par la fonction FMS() se propagent au système de gestion d'énergie selon l'invention via une fonction EMS() dans laquelle le système selon l'invention décrit plus haut est mis en œuvre. Enfin, dans une opération 520, les commandes émises par le pilote 230 sont mises en œuvre, par une fonction DRV() qui vient commander les éléments individuels. Et la boucle reprend avec l'opération 500.

Il va de soi que cette boucle est simplifiée par rapport au fonctionnement réel de l'aéronef, des interruptions pouvant avoir lieu en cas de détection d'une panne ou pour d'autres raisons nécessitant une forme de rétroaction. Le but est d'exposer à quel niveau de l'architecture matérielle se situe l'invention, un FMS ne pouvant être considéré comme un EMS, ni un pilote de commande de réacteur comme un EMS à part entière.

## Revendications

1. Système de gestion d'énergie pour aéronef à source d'énergie hybride comprenant au moins une source d'électricité rechargeable et une source de génération d'électricité, **caractérisé en ce qu'**il comprend :
- un détecteur (200) agencé pour déterminer d'une part des données d'état indiquant un état des éléments du circuit électrique de consommation de puissance de l'aéronef commandé par le système de gestion d'énergie, et d'autre part des données énergétiques relatives à la puissance électrique instantanée demandée par l'aéronef et/ou l'état de chargement des sources d'électricité rechargeables de l'aéronef,
- un automate (210) agencé pour recevoir les données énergétiques du détecteur (200) et pour déterminer un état de commande des sources d'énergie, l'automate (210) comprenant au moins trois états dans le groupe comprenant :
* un état tampon dans lequel la puissance électrique instantanée demandée est inférieure à la capacité de la ou des sources de génération électrique et est fournie par ces dernières,
* un état de charge dans lequel la puissance électrique instantanée demandée est inférieure à la capacité de la ou des sources de génération électrique et est fournie intégralement par la ou les sources de génération d'électricité, et dans lequel la ou les sources de génération d'électricité produit un surplus de puissance utilisé pour recharger la ou des sources d'électricité rechargeables,
* un état turbo dans lequel la puissance électrique instantanée demandée est supérieure à la capacité de la ou des sources de génération électrique, et où la ou les sources d'électricité rechargeables fournissent le complément nécessaire pour atteindre la puissance électrique instantanée demandée,
- un adaptateur (220) agencé pour recevoir les données d'état et pour déterminer une configuration électrique de secours lorsque les données d'état indiquent une panne,
- un pilote (230) agencé pour recevoir l'information d'état de l'automate (210) et pour déterminer une commande électrique pour la ou les sources électriques rechargeables (50, 60, 80, 90) et la ou les sources de génération électrique (18, 20) en fonction de la puissance électrique instantanée demandée,
- un commutateur (240) agencé pour émettre des commandes vers les commutateurs du circuit électrique de consommation de puissance de l'aéronef commandé par le système de gestion d'énergie pour mettre en œuvre une configuration électrique nominale, ou, en cas de réception d'une configuration électrique de secours de l'adaptateur (220), cette configuration électrique de secours,
le pilote (230) étant agencé pour recevoir une configuration électrique de secours de l'adaptateur (220) lorsqu'une panne est détectée, et pour commander l'extinction d'un ou plusieurs éléments du circuit électrique de consommation de puissance de l'aéronef commandé par le système de gestion d'énergie en fonction de la configuration électrique de secours.

2. Système de gestion d'énergie selon la revendication 1, dans lequel le pilote (230) est agencé pour solliciter les sources d'électricité rechargeables lorsque l'automate (210) est dans l'état tampon, pendant une transition durant laquelle la puissance délivrée par la ou les sources de génération électrique augmente jusqu'à la puissance électrique instantanée demandée.

3. Système de gestion d'énergie selon la revendication 1 ou 2, dans lequel l'automate (210) est agencé pour être initialisé avec l'état tampon, et présente les règles de transition suivantes :
- transition de l'état tampon ou de l'état de charge vers l'état turbo lorsque la puissance électrique instantanée demandée est supérieure à la capacité de la ou des sources de génération électrique,
- transition de l'état turbo vers l'état tampon lorsque la puissance électrique instantanée demandée est inférieure à la capacité de la ou des sources de génération électrique,
- transition de l'état tampon vers l'état de charge lorsque la puissance électrique instantanée demandée est inférieure à la capacité de la ou des sources de génération électrique et qu'une ou plusieurs sources d'électricité rechargeables présente un état de charge inférieur à un seuil de charge complète, et
- transition de l'état de charge vers l'état tampon lorsque la puissance électrique instantanée demandée est inférieure à la capacité de la ou des sources de génération électrique et qu'une ou plusieurs sources d'électricité rechargeables présente un état de charge égal à un seuil de charge complète.

4. Système de gestion d'énergie selon l'une des revendications précédentes, dans lequel l'automate (210) comprend en outre un état silencieux dans lequel la ou les sources d'énergie électrique (18, 20) sont désactivées.

5. Système de gestion d'énergie selon la revendication 4 dans lequel l'automate (210) présente en outre les règles de transition suivantes :
- transition de l'état tampon, de charge ou turbo vers l'état silencieux lorsqu'une commande de mode silencieux est reçue par le détecteur (200),
- transition de l'état silencieux vers l'état tampon lorsque la commande de mode silencieux est désactivée.

6. Système de gestion d'énergie selon l'une des revendications précédentes, dans lequel le commutateur (240) est agencé pour recevoir l'état de l'automate (210) et pour émettre des commandes vers les commutateurs du circuit électrique de consommation de puissance de l'aéronef commandé par le système de gestion d'énergie en conséquence.

7. Procédé de gestion d'énergie pour aéronef à source d'énergie hybride comprenant au moins une source d'électricité rechargeable et une source de génération d'électricité, **caractérisé en ce qu'**il comprend les opérations suivantes :
a) déterminer d'une part des données d'état indiquant un état des éléments du circuit électrique de consommation de puissance de l'aéronef commandé par le procédé de gestion d'énergie, et d'autre part des données énergétiques relatives à la puissance électrique instantanée demandée par l'aéronef et/ou l'état de chargement des sources d'électricité rechargeables de l'aéronef,
b) transmettre les données énergétiques de l'opération a) à un automate (210) agencé pour déterminer un état de commande des sources d'énergie, l'automate (210) comprenant au moins trois états dans le groupe comprenant :
* un état tampon dans lequel la puissance électrique instantanée demandée est inférieure à la capacité de la ou des sources de génération électrique et est fournie par ces dernières,
* un état de charge dans lequel la puissance électrique instantanée demandée est inférieure à la capacité de la ou des sources de génération électrique et est fournie intégralement par la ou les sources de génération d'électricité, et dans lequel la ou les sources de génération d'électricité produit un surplus de puissance utilisé pour recharger la ou des sources d'électricité rechargeables,
* un état turbo dans lequel la puissance électrique instantanée demandée est supérieure à la capacité de la ou des sources de génération électrique, et où la ou les sources d'électricité rechargeables fournissent le complément nécessaire pour atteindre la puissance électrique instantanée demandée,
c) déterminer une commande électrique pour la ou les sources électriques rechargeables (50, 60, 80, 90) et la ou les sources de génération électrique (18, 20) en fonction de la puissance électrique instantanée demandée et de l'état de l'automate déterminé à l'opération b),
d) détecter à partir des données d'état la survenance d'une panne et déterminer une configuration électrique de secours, et
e) émettre des commandes vers les commutateurs du circuit électrique de consommation de puissance de l'aéronef commandé par le système de gestion d'énergie pour mettre en œuvre une configuration électrique nominale, ou, en cas de détermination d'une configuration électrique de secours à l'opération d), pour la mettre en œuvre en commandant **l'extinction** d'un ou plusieurs éléments du circuit électrique de consommation de puissance de l'aéronef commandé par le système de gestion d'énergie en fonction de cette configuration électrique de secours.

8. Programme d'ordinateur comprenant des instructions mettre en œuvre le procédé selon la revendication 7 lorsque ledit programme d'ordinateur est exécuté sur un ordinateur.

9. Support de stockage de données sur lequel est enregistré ce programme d'ordinateur selon la revendication 8.

## Patentansprüche

1. Energiemanagementsystem für ein Luftfahrzeug mit hybrider Energiequelle, umfassend mindestens eine wiederaufladbare Stromquelle und eine Stromerzeugungsquelle, **dadurch gekennzeichnet, dass** es Folgendes umfasst:
- einen Detektor (200), der eingerichtet ist, um einerseits Zustandsdaten zu bestimmen, die einen Zustand der Elemente des elektrischen Leistungsverbrauchskreises des Luftfahrzeugs anzeigen, das durch das Energiemanagementsystem gesteuert wird, und andererseits Energiedaten bezüglich der vom Luftfahrzeug angeforderten elektrischen Momentanleistung und/oder des Ladezustands der wiederaufladbaren Stromquellen des Luftfahrzeugs,
- einen Zustandsautomaten (210), der eingerichtet ist, um die Energiedaten vom Detektor (200) zu empfangen und einen Steuerungszustand der Energiequellen zu bestimmen, wobei der Zustandsautomat (210) mindestens drei Zustände aus der Gruppe umfasst, die Folgendes umfasst:
• einen Pufferzustand, in dem die angeforderte elektrische Momentanleistung geringer ist als die Kapazität der Stromerzeugungsquelle oder -quellen und von letzteren bereitgestellt wird,
• einen Ladezustand, in dem die angeforderte elektrische Momentanleistung geringer ist als die Kapazität der Stromerzeugungsquelle oder -quellen und vollständig von der oder den Stromerzeugungsquellen bereitgestellt wird, und in dem die oder die Stromerzeugungsquellen einen Leistungsüberschuss erzeugen, der zum Wiederaufladen der wiederaufladbaren Stromquelle oder - quellen verwendet wird,
• einen Turbozustand, in dem die angeforderte elektrische Momentanleistung größer ist als die Kapazität der Stromerzeugungsquelle oder -quellen, und in dem die wiederaufladbare Stromquelle oder -quellen die notwendige Ergänzung bereitstellen, um die angeforderte elektrische Momentanleistung zu erreichen,
- einen Adapter (220), der eingerichtet ist, um die Zustandsdaten zu empfangen und eine elektrische Notkonfiguration zu bestimmen, wenn die Zustandsdaten einen Ausfall anzeigen,
- einen Treiber (230), der eingerichtet ist, um die Zustandsinformation des Zustandsautomaten (210) zu empfangen und einen elektrischen Steuerbefehl für die wiederaufladbare Stromquelle oder -quellen (50, 60, 80, 90) und die Stromerzeugungsquelle oder -quellen (18, 20) in Abhängigkeit von der angeforderten elektrischen Momentanleistung zu bestimmen,
- einen Schalter (240), der eingerichtet ist, um Steuerbefehle an die Schalter des elektrischen Leistungsverbrauchskreises des Luftfahrzeugs zu senden, das durch das Energiemanagementsystem gesteuert wird, um eine elektrische Nennkonfiguration oder, im Falle des Empfangs einer elektrischen Notkonfiguration vom Adapter (220), diese elektrische Notkonfiguration zu implementieren,
- wobei der Treiber (230) eingerichtet ist, um eine elektrische Notkonfiguration vom Adapter (220) zu empfangen, wenn ein Ausfall erkannt wird, und das Abschalten eines oder mehrerer Elemente des elektrischen Leistungsverbrauchskreises des Luftfahrzeugs, das durch das Energiemanagementsystem gesteuert wird, in Abhängigkeit von der elektrischen Notkonfiguration zu befehlen.

2. Energiemanagementsystem nach Anspruch 1, wobei der Treiber (230) eingerichtet ist, um die wiederaufladbaren Stromquellen anzufordern, wenn sich der Zustandsautomat (210) im Pufferzustand befindet, während eines Übergangs, bei dem sich die von der oder den Stromerzeugungsquellen gelieferte Leistung bis zur angeforderten elektrischen Momentanleistung erhöht.

3. Energiemanagementsystem nach Anspruch 1 oder 2, wobei der Zustandsautomat (210) eingerichtet ist, um mit dem Pufferzustand initialisiert zu werden, und die folgenden Übergangsregeln aufweist:
- Übergang vom Pufferzustand oder vom Ladezustand in den Turbozustand, wenn die angeforderte elektrische Momentanleistung größer ist als die Kapazität der Stromerzeugungsquelle oder -quellen,
- Übergang vom Turbozustand in den Pufferzustand, wenn die angeforderte elektrische Momentanleistung geringer ist als die Kapazität der Stromerzeugungsquelle oder -quellen,
- Übergang vom Pufferzustand in den Ladezustand, wenn die angeforderte elektrische Momentanleistung geringer ist als die Kapazität der Stromerzeugungsquelle oder -quellen und eine oder mehrere wiederaufladbare Stromquellen einen Ladezustand aufweisen, der niedriger als eine Vollladeschwelle ist, und
- Übergang vom Ladezustand in den Pufferzustand, wenn die angeforderte elektrische Momentanleistung geringer ist als die Kapazität der Stromerzeugungsquelle oder -quellen und eine oder mehrere wiederaufladbare Stromquellen einen Ladezustand aufweisen, der gleich einer Vollladeschwelle ist.

4. Energiemanagementsystem nach einem der vorhergehenden Ansprüche, wobei der Zustandsautomat (210) ferner einen leisen Zustand umfasst, in dem die elektrische Energiequelle oder -quellen (18, 20) deaktiviert sind.

5. Energiemanagementsystem nach Anspruch 4, wobei der Zustandsautomat (210) ferner die folgenden Übergangsregeln aufweist:
- Übergang vom Puffer-, Lade- oder Turbozustand in den leisen Zustand, wenn ein Befehl für einen leisen Modus vom Detektor (200) empfangen wird,
- Übergang vom leisen Zustand in den Pufferzustand, wenn der Befehl für einen leisen Modus deaktiviert wird.

6. Energiemanagementsystem nach einem der vorhergehenden Ansprüche, wobei der Schalter (240) eingerichtet ist, um den Zustand des Zustandsautomaten (210) zu empfangen und entsprechende Steuerbefehle an die Schalter des elektrischen Leistungsverbrauchskreises des Luftfahrzeugs zu senden, das durch das Energiemanagementsystem gesteuert wird.

7. Energiemanagementverfahren für ein Luftfahrzeug mit hybrider Energiequelle, umfassend mindestens eine wiederaufladbare Stromquelle und eine Stromerzeugungsquelle, **dadurch gekennzeichnet, dass** es die folgenden Vorgänge umfasst:
a) Bestimmen einerseits von Zustandsdaten, die einen Zustand der Elemente des elektrischen Leistungsverbrauchskreises des Luftfahrzeugs anzeigen, das durch das Energiemanagementverfahren gesteuert wird, und andererseits von Energiedaten bezüglich der vom Luftfahrzeug angeforderten elektrischen Momentanleistung und/oder des Ladezustands der wiederaufladbaren Stromquellen des Luftfahrzeugs,
b) Übertragen der Energiedaten von Vorgang a) an einen Zustandsautomaten (210), der eingerichtet ist, um einen Steuerungszustand der Energiequellen zu bestimmen, wobei der Zustandsautomat (210) mindestens drei Zustände aus der Gruppe umfasst, die Folgendes umfasst:
• einen Pufferzustand, in dem die angeforderte elektrische Momentanleistung geringer ist als die Kapazität der Stromerzeugungsquelle oder -quellen und von letzteren bereitgestellt wird,
• einen Ladezustand, in dem die angeforderte elektrische Momentanleistung geringer ist als die Kapazität der Stromerzeugungsquelle oder -quellen und vollständig von der oder den Stromerzeugungsquellen bereitgestellt wird, und in dem die oder die Stromerzeugungsquellen einen Leistungsüberschuss erzeugen, der zum Wiederaufladen der wiederaufladbaren Stromquelle oder - quellen verwendet wird,
• einen Turbozustand, in dem die angeforderte elektrische Momentanleistung größer ist als die Kapazität der Stromerzeugungsquelle oder -quellen, und in dem die wiederaufladbare Stromquelle oder -quellen die notwendige Ergänzung bereitstellen, um die angeforderte elektrische Momentanleistung zu erreichen,
c) Bestimmen eines elektrischen Steuerbefehls für die wiederaufladbare Stromquelle oder -quellen (50, 60, 80, 90) und die Stromerzeugungsquelle oder - quellen (18, 20) in Abhängigkeit von der angeforderten elektrischen Momentanleistung und dem in Vorgang b) bestimmten Zustand des Zustandsautomaten,
d) Erkennen des Auftretens eines Ausfalls aus den Zustandsdaten und Bestimmen einer elektrischen Notkonfiguration, und
e) Senden von Steuerbefehlen an die Schalter des elektrischen Leistungsverbrauchskreises des Luftfahrzeugs, das durch das Energiemanagementsystem gesteuert wird, um eine elektrische Nennkonfiguration oder, im Falle der Bestimmung einer elektrischen Notkonfiguration in Vorgang d), diese elektrische Notkonfiguration zu implementieren, um sie zu implementieren, indem das Abschalten eines oder mehrerer Elemente des elektrischen Leistungsverbrauchskreises des Luftfahrzeugs, das durch das Energiemanagementsystem gesteuert wird, in Abhängigkeit von dieser elektrischen Notkonfiguration befohlen wird.

8. Computerprogramm, umfassend Befehle zur Durchführung des Verfahrens nach Anspruch 7, wenn das Computerprogramm auf einem Computer ausgeführt wird.

9. Datenspeichermedium, auf dem dieses Computerprogramm nach Anspruch 8 gespeichert ist.

## Claims

1. Energy management system for an aircraft with a hybrid energy source comprising at least one rechargeable electricity source and one electricity generation source, **characterized in that** it comprises:
- a detector (200) arranged to determine, on one hand, state data indicating a state of elements of the power consumption electrical circuit of the aircraft controlled by the energy management system, and on the other hand, energy data relating to the instantaneous electrical power requested by the aircraft and/or the state of charge of the rechargeable electricity sources of the aircraft,
- a state machine (210) arranged to receive the energy data from the detector (200) and to determine a control state of the energy sources, the state machine (210) comprising at least three states from the group comprising:
• a buffer state in which the requested instantaneous electrical power is less than the capacity of the electricity generation source or sources and is supplied by the latter,
• a charging state in which the requested instantaneous electrical power is less than the capacity of the electricity generation source or sources and is fully supplied by the electricity generation source or sources, and in which the electricity generation source or sources produce a power surplus used to recharge the rechargeable electricity source or sources,
• a turbo state in which the requested instantaneous electrical power is greater than the capacity of the electricity generation source or sources, and wherein the rechargeable electricity source or sources provide the necessary complement to reach the requested instantaneous electrical power,
- an adapter (220) arranged to receive the state data and to determine an emergency electrical configuration when the state data indicate a failure,
- a driver (230) arranged to receive the state information of the state machine (210) and to determine an electrical command for the rechargeable electrical source or sources (50, 60, 80, 90) and the electricity generation source or sources (18, 20) as a function of the requested instantaneous electrical power,
- a switch (240) arranged to send commands to the switches of the power consumption electrical circuit of the aircraft controlled by the energy management system to implement a nominal electrical configuration, or, in case of reception of an emergency electrical configuration from the adapter (220), this emergency electrical configuration,
- the driver (230) being arranged to receive an emergency electrical configuration from the adapter (220) when a failure is detected, and to command the shutdown of one or more elements of the power consumption electrical circuit of the aircraft controlled by the energy management system as a function of the emergency electrical configuration.

2. Energy management system according to claim 1, wherein the driver (230) is arranged to solicit the rechargeable electricity sources when the state machine (210) is in the buffer state, during a transition during which the power delivered by the electricity generation source or sources increases up to the requested instantaneous electrical power.

3. Energy management system according to claim 1 or 2, wherein the state machine (210) is arranged to be initialized with the buffer state, and presents the following transition rules:
- transition from the buffer state or the charging state to the turbo state when the requested instantaneous electrical power is greater than the capacity of the electricity generation source or sources,
- transition from the turbo state to the buffer state when the requested instantaneous electrical power is less than the capacity of the electricity generation source or sources,
- transition from the buffer state to the charging state when the requested instantaneous electrical power is less than the capacity of the electricity generation source or sources and one or more rechargeable electricity sources present a state of charge lower than a full charge threshold, and
- transition from the charging state to the buffer state when the requested instantaneous electrical power is less than the capacity of the electricity generation source or sources and one or more rechargeable electricity sources present a state of charge equal to a full charge threshold.

4. Energy management system according to one of the preceding claims, wherein the state machine (210) further comprises a silent state in which the electrical energy source or sources (18, 20) are deactivated.

5. Energy management system according to claim 4, wherein the state machine (210) further presents the following transition rules:
- transition from the buffer, charging or turbo state to the silent state when a silent mode command is received by the detector (200),
- transition from the silent state to the buffer state when the silent mode command is deactivated.

6. Energy management system according to one of the preceding claims, wherein the switch (240) is arranged to receive the state of the state machine (210) and to send commands to the switches of the power consumption electrical circuit of the aircraft controlled by the energy management system accordingly.

7. Energy management method for an aircraft with a hybrid energy source comprising at least one rechargeable electricity source and one electricity generation source, **characterized in that** it comprises the following operations:
a) determining, on one hand, state data indicating a state of the elements of the power consumption electrical circuit of the aircraft controlled by the energy management method, and on the other hand, energy data relating to the requested instantaneous electrical power by the aircraft and/or the state of charge of the rechargeable electricity sources of the aircraft,
b) transmitting the energy data of operation a) to a state machine (210) arranged to determine a control state of the energy sources, the state machine (210) comprising at least three states from the group comprising:
• a buffer state in which the requested instantaneous electrical power is less than the capacity of the electricity generation source or sources and is supplied by the latter,
• a charging state in which the requested instantaneous electrical power is less than the capacity of the electricity generation source or sources and is fully supplied by the electricity generation source or sources, and in which the electricity generation source or sources produce a power surplus used to recharge the rechargeable electricity source or sources,
• a turbo state in which the requested instantaneous electrical power is greater than the capacity of the electricity generation source or sources, and wherein the rechargeable electricity source or sources provide the necessary complement to reach the requested instantaneous electrical power,
c) determining an electrical command for the rechargeable electrical source or sources (50, 60, 80, 90) and the electricity generation source or sources (18, 20) as a function of the requested instantaneous electrical power and of the state of the state machine determined in operation b),
d) detecting from the state data the occurrence of a failure and determining an emergency electrical configuration, and
e) sending commands to the switches of the power consumption electrical circuit of the aircraft controlled by the energy management system to implement a nominal electrical configuration, or, in case of determination of an emergency electrical configuration in operation d), this emergency electrical configuration, to implement it by commanding the shutdown of one or more elements of the power consumption electrical circuit of the aircraft controlled by the energy management system as a function of this emergency electrical configuration.

8. Computer program comprising instructions to implement the method according to claim 7 when said computer program is executed on a computer.

9. Data storage medium on which is recorded this computer program according to claim 8.
